(19) Europäisches Patentamt
European Patent Office
Office européen des brevets

(11) EP 0 722 984 B1

(12) **EUROPÄISCHE PATENTSCHRIFT**

(45) Veröffentlichungstag und Bekanntmachung des Hinweises auf die Patenterteilung:
**03.11.1999 Patentblatt 1999/44**

(51) Int Cl.[6]: **C08L 69/00**
// (C08L69/00, 23:08)

(21) Anmeldenummer: **96100159.1**

(22) Anmeldetag: **08.01.1996**

(54) **Mischungen aus aromatischen Polycarbonaten und epoxyfunktionellen Terpolymeren**

Blends of aromatic polycarbonates and epoxy functional terpolymers

Compositions à base de polycarbonates aromatiques et de terpolymères à fonction époxy

(84) Benannte Vertragsstaaten:
**BE DE FR GB IT**

(30) Priorität: **19.01.1995 DE 19501501**

(43) Veröffentlichungstag der Anmeldung:
**24.07.1996 Patentblatt 1996/30**

(73) Patentinhaber: **BAYER AG**
**51368 Leverkusen (DE)**

(72) Erfinder:
- **Köhler, Burkhard, Dr.**
  **D-51373 Leverkusen (DE)**
- **Bier, Peter, Dr.**
  **D-47800 Krefeld (DE)**

(56) Entgegenhaltungen:
**EP-A- 0 247 465**
**EP-A- 0 362 646**
**EP-A- 0 472 064**
**EP-A- 0 677 555**
**EP-A- 0 699 713**
**DE-A- 4 038 590**
**US-A- 5 124 377**

- **DATABASE WPI Week 8549 Derwent Publications Ltd., London, GB; AN 85-307814 XP002021938 & JP-A-60 215 052 (SUMITOMO CHEM. IND. KK) , 28.Oktober 1985**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 722 984 B1

Printed by Jouve, 75001 PARIS (FR)

## Beschreibung

Die Erfindung betrifft Mischungen aus speziellen Dihydroxydiphenylcycloalkan-Polycarbonaten und Terpolymeren aus Ethylen, Acrylaten und Monomeren mit Epoxygruppen.

Erfindungsgemäß geeignete Dihydroxydiphenylcycloalkan-Polycarbonate sind bekannt und in der europäischen Patentschrift 359 953 beschrieben. Besonders bevorzugt ist das Polycarbonat auf Basis 1,1 Bis-(4-hydroxyphenyl)-3,3,5-trimethylcyclohexan und das Copolycarbonat dieses Bisphenols und von Bisphenol A.

Diese Polycarbonate zeichnen sich durch eine hohe Wärmeformbeständigkeit aus; ihre Spannungsrißbeständigkeit und Zähigkeit läßt sich dagegen noch verbessern.

Der Erfindung liegt die Erkenntnis zugrunde, daß die genannten Polycarbonate sich mit epoxyfunktionellen Terpolymeren mischen lassen, wobei eine unerwartet hohe Spannungsrißbeständigkeit und Schlagzähigkeit auftritt.

Gegenstand der Erfindung sind Mischungen aus

A) 80 bis 99 Gew.-%, vorzugsweise 85 bis 93 Gew.-% hochmolekularem, thermoplastischem, aromatischem Polycarbonat mit Molekulargewicht $\overline{M}_w$ (Gewichtsmittel) von mindestens 10.000, vorzugsweise von 20.000 bis 300.000, das bifunktionelle Carbonatstruktureinheiten der Formel (I) enthält,

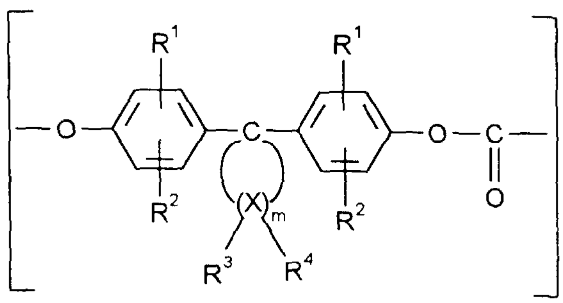

(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten,<br>mit der Maßgabe, daß an mindestens einem Atom X $R^3$ und $R^4$ gleichzeitig Alkyl bedeuten. |

B) 1 bis 20, vorzugsweise 7 bis 15 Gew.-% eines Terpolymerisats aus 60 bis 70 Gew.-% Ethylen, 37 bis 20 Gew.-% eines Acrylsäureesters eines $C_2$-$C_{12}$-Alkohols und 3 bis 10 Gew.-% eines Monomers mit Epoxygruppen, vorzugsweise Glycidylmethacrylat.

Die Polycarbonate A) und ihre Herstellung sind Gegenstand des Europäischen Patent 359 953. Die Polycarbonate selbst und ihre Herstellung sind dort ausführlich beschrieben.

Ausgangsprodukte für die Herstellung der Polycarbonate A) sind demnach Dihydroxydiphenylcycloalkane der Formel (Ia)

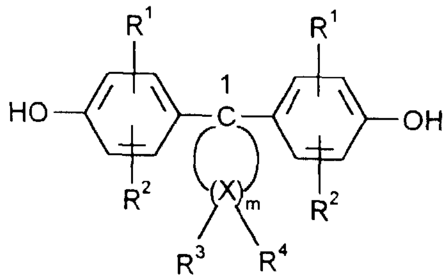

(Ia),

worin

X, $R^1$, $R^2$, $R^3$, $R^4$ und m die für die Formel (I) genannte Bedeutung haben.

Bevorzugt sind an 1 bis 2 Atomen X, insbesondere nur an einem Atom X, $R^3$ und $R^4$ gleichzeitig Alkyl.

Bevorzugter Alkylrest ist Methyl; die X-Atome in α-Stellung zu dem Diphenyl-substituierten C-Atom (C-1) sind bevorzugt nicht dialkylsubstituiert, dagegen ist die Alkylsubstitution in β-Stellung zu C-1 bevorzugt.

Besonders bevorzugt sind Dihydroxydiphenylcycloalkane mit 5 und 6 Ring-C-Atomen im cycloaliphatischen Rest (m = 4 oder 5 Formel Ia), beispielsweise die Diphenole der Formeln (Ib) bis (Id),

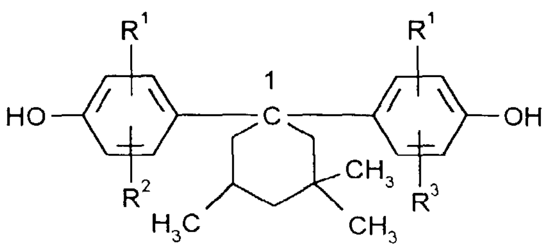

(Ib),

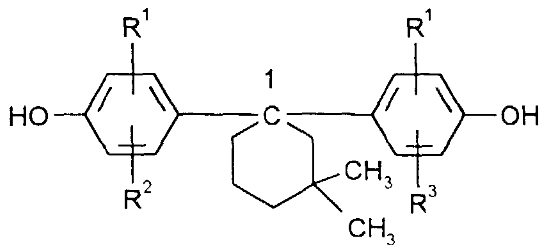

(Ic),

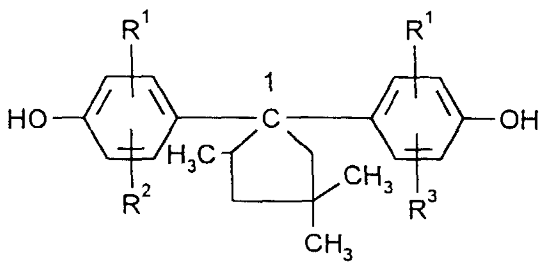

(Id),

wobei das 1,1-Bis-(4-hydroxyphenyl)-3,3,5-trimethylcyclohexan (Formel Ib mit $R^1$ und $R^2$ gleich H) besonders bevorzugt ist.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

HO-Z-OH (Ie),

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Bevorzugte andere Diphenole sind beispielsweise:

4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, α,α-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, α,α-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ie) sind beispielsweise:

2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ie), reicht von 100 Mol-% (Ia) zu 0 Mol-% (Ie) bis 2 Mol-% (Ia) zu 98 Mol-% (Ie), vorzugsweise von 100 Mol-% (Ia) zu 0 Mol-% (Ie) bis 5 Mol-% (Ia) zu 95 Mol-% (Ie) und insbesondere von 100 Mol-% (Ia) zu 0 Mol-% (Ie) bis 10 Mol-% (Ia) zu 90 Mol-% (Ie) und ganz besonders von 100 Mol-% (Ia) zu 0 Mol-% (Ie) bis 20 Mol-% (Ia) zu 80 Mol-% (Ie).

Die hochmolekularen Polycarbonate aus den Diphenolen der Formel (Ia), gegebenenfalls in Kombination mit anderen Diphenolen, können nach allen bekannten Polycarbonat-Herstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn die Verzweigung gewünscht wird, kann sie in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:

Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxylphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zu an sich bekannten Regelung des Molekulargewichts der Polycarbonate A dienen monofunktionelle Verbindungen. Geeignete Verbindungen sind z.B. Phenol, tert.-Butylphenole oder andere Alkyl-$C_1$-$C_7$-substituierte Phenole.

Zur Regelung des Molekulargewichts sind insbesondere kleine Mengen Phenole der Formel (If) geeignet

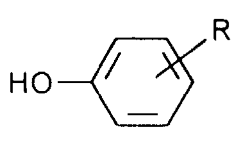

(If),

worin

R einen verzweigten $C_8$- und/oder $C_9$-Alkylrest darstellt.

Bevorzugt ist im Alkylrest R der Anteil an $CH_3$-Protonen zwischen 47 und 89 % und der Anteil der CH- und

$CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate A können vorzugsweise nach dem Phasengrenzflächenverhalten (vgl. H. Schnell "Chemistry and Physics of Polycarbonates", Polymer Reviews, Vol. IX, Seite 33 ff., Interscience Publ. 1964) in an sich bekannter Weise hergestellt werden.

Hierbei werden die Diphenole der Formel (Ia) in wäßrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ie), eingesetzt. Zur Regulierung des Molekulargewichts können Kettenabbrecher z. B. der Formel (If) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wäßrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ie) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ie); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die mitverwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise NaOH-Lösung. Die Herstellung der Polycarbonate A nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonate A können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonate A haben bevorzugt Molekulargewichte $\overline{M}_w$ (Gewichtsmittel, ermittelt durch Gelchromatographie nach vorheriger Eichung) von mindesetens 10.000, besonders bevorzugt von 20.000 bis 300.000 und insbesondere von 20.000 bis 80.000.

Die besonders bevorzugten Polycarbonate A sind also solche aus Einheiten der Formel (Ig)

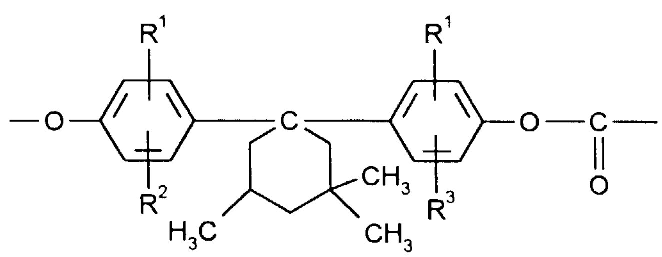

(Ig),

worin $R^1$ und $R^2$ die für Formel (I) genannte Bedeutung haben, besonders bevorzugt aber Wasserstoff, sind.

Durch die beliebige Kombination mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders von 100 Mol-% bis 20 Mol-%, bezogen auf die Gesamtmenge von 100 Mol-% an Diphenoleinheiten, in Polycarbonaten enthalten.

Die Mischungen können durch Schmelzmischung der Komponenten in Knetern oder Extrudern bei 220°C bis 380°C oder durch gemeinsames Lösen der Komponenten in geeigneten Lösungsmitteln, wie z.B. Chlorbenzol und/ oder Methylenchlorid, und Ausdampfen auf dem Ausdampfextruder hergestellt werden.

Die Terpolymerisate B) werden durch Copolymerisation von Ethylen, $C_2$-$C_{12}$-Alkyl-Acrylaten und epoxyfunk-

tionellen Monomeren, vorzugsweise Glycidylmethacrylat hergestellt.

Besonders bevorzugt sind Terpolymerisate aus Ethylen, Butyl- oder 2-Ethylhexylacrylat und Glycidylmethacrylat.

Die erfindungsgemäßen Mischungen lassen sich durch Spritzguß oder Extrusion zu Formkörpern oder Halbzeugen verarbeiten. Die Formkörper finden Verwendung z.B. als Reflektoren für Lampen, Gehäuse für technische Geräte und im Kraftfahrzeugbau (Anwendungen unter der Motorhaube in Motornähe).

Die Mischungen zeichnen sich durch ein sehr gutes Spannungsrißverhalten und eine gute Zähigkeit (Zähbruch bei Raumtemperatur) bei hoher Wärmeformbeständigkeit aus.

## Beispiele

### Beispiel 1

1800 g eines Co-Polycarbonats aus 65 Mol-% Bisphenol A und 35 Mol-% 1,1-Bishydroxyphenyl-3,3,5-trimethylcyclohexan mit der relativen Lösungsviskosität von 1,29 (0,5 % bei 25°C in Methylenchlorid) und 200 g eines Terpolymerisats aus Ethylen, Butylacrylat und Glycidylmethacrylat (Lotader AX 8660 der Fa. Norsolor) werden bei 280°C auf einem Zweiwellenextruder ZSK 32 in der Schmelze gemischt.

Man erhält ein Material, das beim Kerbschlagversuch in 100 % der Fälle Zähbruch zeigt (43,4 kJ/$m^2$ Kerbschlagzähigkeit).

Ein auf 2 % Randfaserdehnung gespannter Stab zeigt bei 2-minütiger Einwirkung einer Mischung aus Toluol-Isooctan 1:1 noch Zähbruch im Schlagbiegeversuch (das Co-Polycarbonat allein bricht schon ohne Vorspannung).

### Beispiel 2

Man mischt 1 900 g des Co-Polycarbonats mit 100 g des Terpolymerisats. Man erhält eine Mischung, die im Kerbschlagversuch in 20 % der Fälle Sprödbruch zeigt.

### Vergleich 1

Man mischt 1 800 g des Co-Polycarbonats mit 200 g eines Terpolymerisats aus Ethylen, Butylacrylat und Maleinsäureanhydrid (Lotader 5500 der Fa. Norsolor). Man erhält eine Mischung, die in 0 % der Fälle Zähbruch zeigt.

## Patentansprüche

**1.** Mischungen aus

A) 80 bis 99 Gew.-% hochmolekularem, thermoplastischem, aromatischem Polycarbonat mit Molekulargewicht $\overline{M}_w$ (Gewichtsmittel) von mindestens 10.000, vorzugsweise von 20.000 bis 300.000, das bifunktionelle Carbonatstruktureinheiten der Formel (I) enthält,

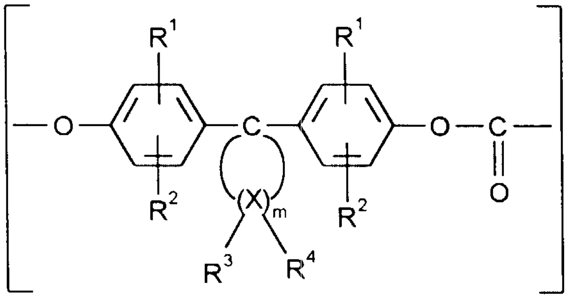

(I),

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$ für jedes X individuell wählbar, unabhängig voneinander Wasserstoff oder $C_1$-$C_6$-Alkyl und

X Kohlenstoff bedeuten,
mit der Maßgabe, daß an mindestens einem Atom X $R^3$ und $R^4$ gleichzeitig Alkyl bedeuten.

B) 1 bis 20 Gew.-% eines epoxyfunktionellen Terpolymerisats aus 60 bis 70 Gew.-% Ethylen, 37 bis 20 Gew.-% eines Acrylsäureesters eines $C_2$-$C_{12}$-Alkohols und 3 bis 10 Gew.-% eines Monomers mit Epoxygruppen.

## Claims

1. Blends of

A) 80 to 99 wt.% of high molecular weight, thermoplastic, aromatic polycarbonate having a molecular weight $\overline{M}_w$ (weight average) of at least 10000, preferably of 20000 to 300000, which contains bifunctional carbonate structural units of the formula (I),

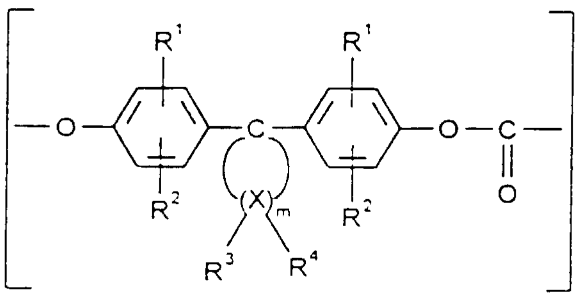

(I),

in which

$R^1$ and $R^2$ mutually independently mean hydrogen, halogen, $C_1$-$C_8$ alkyl, $C_5$-$C_6$ cycloalkyl, $C_6$-$C_{10}$ aryl and $C_7$-$C_{12}$ aralkyl,

m means an integer from 4 to 7,

$R^3$ and $R^4$ individually selectably for each X, mutually independently mean hydrogen or $C_1$-$C_6$ alkyl and

X means carbon,
providing that on at least one atom X, $R^3$ and $R^4$ simultaneously mean alkyl,

B) 1 to 20 wt.% of an epoxy-functional terpolymer prepared from 60 to 70 wt.% of ethylene, 37 to 20 wt.% of an acrylic acid ester of a $C_2$-$C_{12}$ alcohol and 3 to 10 wt.% of a monomer having epoxy groups.

## Revendications

1. Mélanges de

A) 80 à 99 % en poids d'un polycarbonate aromatique thermoplastique à haut poids moléculaire, poids moléculaire $\overline{M}_w$ (moyenne en poids) au moins 10 000, de préférence 20 000 à 300 000, contenant des motifs de structure bifonctionnels de carbonates de formule (I)

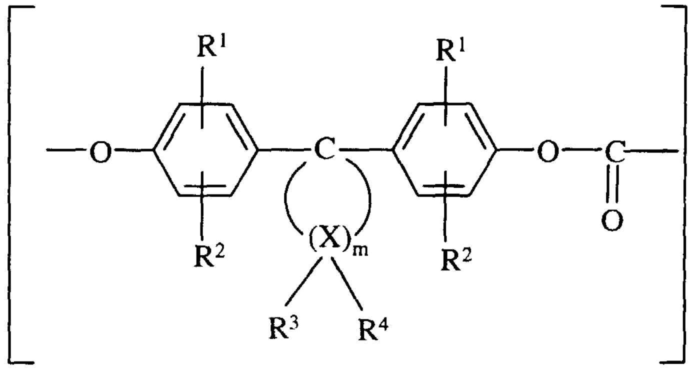

(I),

dans laquelle

$R^1$ et $R^2$ représentent chacun, indépendamment l'un de l'autre, l'hydrogène, un halogène, un groupe alkyle en $C_1$-$C_8$, cycloalkyle en $C_5$-$C_6$, aryle en $C_6$-$C_{10}$ ou aralkyle en $C_7$-$C_{12}$,

m est un nombre entier allant de 4 à 7,

$R^3$ et $R^4$, qui peuvent choisis individuellement pour chaque atome X, représentent chacun, indépendamment l'un de l'autre, l'hydrogène ou un groupe alkyle en $C_1$-$C_6$ et

X représente le carbone,

sous réserve que, sur au moins un atome X, $R^3$ et $R^4$ représentent tous deux des groupes alkyle,
B) 1 à 20 % en poids d'un copolymère ternaire, à fonctions époxy, de 60 à 70 % en poids d'éthylène, 37 à 20 % en poids d'un ester acrylique d'un alcool en $C_2$-$C_{12}$ et 3 à 10 % en poids d'un monomère à groupes époxy.